# EUROPÄISCHE PATENTSCHRIFT

(11) **EP 2 583 594 B1**
(45) Veröffentlichungstag und Bekanntmachung des Hinweises auf die Patenterteilung: **09.04.2014**
(21) Anmeldenummer: 12189083.4
(22) Anmeldetag: 18.10.2012
(51) Int. Cl.: A47J 27/14

(54) **Gargerät mit einem um eine Kippachse kippbaren Garbehälter**
Cooking device with a cooking container which tilts around a tilting axis
Appareil de cuisson avec un récipient de cuisson basculant autour d'un axe de basculement

(30) Priorität: 19.10.2011 DE 102011116273
(43) Veröffentlichungstag der Anmeldung: 24.04.2013
(73) Patentinhaber: MKN Maschinenfabrik Kurt Neubauer GmbH & Co. KG, 38300 Wolfenbüttel (DE)
(72) Erfinder: Boczaga, Jörg, 38304 Wolfenbüttel (DE); Kaczmarczyk, Marian, 38154 Königslutter (DE); Scharnofske, Hartmut, 38304 Wolfenbüttel (DE)
(74) Vertreter: Strobel, Wolfgang

(56) Entgegenhaltungen:
- EP-A1- 1 488 721
- DE-A1- 3 525 845
- DE-U- 6 914 432
- JP-A- 2007 285 546
- US-A- 3 797 377
- US-A- 3 964 378

## Beschreibung

Die vorliegende Erfindung betrifft ein Gargerät zur Behandlung von Nahrungsmitteln, mit einem Garbehälter, nach dem Oberbegriff des Anspruchs 1.

Gargeräte zur Behandlung von Nahrungsmitteln sind in vielfacher Form bekannt. Sie weisen allgemein einen tiegelförmigen Garraum auf, der mit einem Deckel verschließbar ist. Zum Entleeren des Garraums ist der den Garraum umschließende Garbehälter kippbar, beispielsweise in Form von Kippbratpfannen.

Derartige Geräte dienen insbesondere zur Zubereitung von Gargut in Form von flüssigen, cremigen oder schüttfähigen Nahrungsmitteln, beispielsweise von Suppen, Sausen, Rührei, Gulasch, Süßspeisen, Reis oder Erbsen. Dieses Gargut wird zunächst im Garraum zubereitet und dort insbesondere erhitzt. Dabei ist der Garraum meist mit einem Deckel verschlossen, der während des Zubereitungsvorganges insbesondere dichtend und druckfest auf der umlaufenden Oberkante der Wandung des Garbehälters liegt.

Die Wandung des Garraums, also der Garbehälter selbst ist meist doppelwandig ausgebildet. Diese Doppelwandigkeit verbessert die thermische Dämmung gegenüber der Umgebung und ermöglicht es auch, bestimmte Aggregate, wie etwa eine Heizeinrichtung, Abflussrohre, etc. innerhalb der Doppelwandung anzuordnen.

Nach der Zubereitung des Garguts wird dieses mit derartigen kippbaren Gargefäßen dadurch entnommen, dass der gesamte Garbehälter mit dem Garraum und seinem Inhalt um eine Kippachse gekippt wird, so dass das zubereitete insbesondere flüssige Gargut über eine Kante der Wandung ausgegossen wird, in der Regel in einen dort stehenden ggf. kleineren Aufnahmebehälter.

Um auch kleinere Aufnahmebehälter bei diesem Ausgießvorgang zu treffen und ein geregeltes Ausströmen des Garguts zu ermöglichen, ist ein Ausguss vorgesehen.

Aus der US-A-3,964,378 ist ein Gargerät mit einem kippbaren Tiegel bekannt, der einen vorderen nach innen schräg nach oben vorspringenden Randabschnitt über die gesamte vordere Tiegellänge aufweist, in der ein Ausguss ausgebildet ist. Bei zu schnellem Kippen des Tiegels besteht die Gefahr, dass der Tiegelinhalt auch über die obere Kante des Randabschnitts abfließt.

Die JP-A-2007 28 55 46 zeigt ein Gargerät mit einem Garbehälter, bei dem ein Ausguss in der Vorderwand ausgebildet ist, wobei eine Oberkante vorgesehen ist, über die das Gargut beim Ausgießen fließt und an einer Vorderkante zwischen zwei Leitelementen den Garbehälter verlässt. Die Leitelemente sind verbunden mit vorderen Längsleisten, die sich weiter in Umfangsrichtung des Garbehälters fortsetzen und so einen bis auf den Ausguss umlaufenden Rand an der Oberseite des Garbehälters bilden.

Diese Ausgestaltung hat einerseits den Nachteil, dass kann ein seitliches Abfließen des Garbehälterinhalts neben dem Ausguss bei einem zu abrupten Kippen nicht verhindert werden kann und ergeben sich andererseits größere Probleme den Deckel gegenüber dem umlaufenden Rand sicher abzudichten, insbesondere dann wenn das Gargerät in einem Druckgarbetrieb betrieben werden wird, bei dem im Tiegel ein gegenüber der Umgebung deutlich erhöhter Druck herrscht.

Weiterhin besteht bei dem Gargerät nach der JP-A-2007 28 55 46 das Problem, dass bei einem Ausgießen bzw. Überfließen aus dem Garraum und Auftreffen an den vorderen Längsleisten und dem daran sich anschließenden umlaufenden Rand, es aufgrund der Eckbereiche sowohl zwischen Oberseite bzw. Oberkante des Tiegels und den Längsleisten als auch in den Ecken erhöhte Verschmutzungsprobleme, die nur durch ein aufwändiges Reinigen der Eckbereiche entfernt werden können.

Aus der DE 35 25 845 A1 ist ein gattungsgemäßes Gargerät zur Behandlung von Nahrungsmitteln, mit einem Garbehälter, der eine Vorderwand, eine Rückwand, zwei Seitenwände und einen Boden aufweist, die zusammen einen Garraum bilden, wobei ein Deckel vorgesehen ist, der in der Lage ist, den Garraum zu verschließen, wobei der Garbehälter um eine Kippachse zur Entleerung des Garraums kippbar ist, wobei zum Entleeren des Garraums eine obere Kante bzw. Oberkante an der Vorderwand vorgesehen ist, in der ein Ausguss ausgebildet ist, wobei der Ausguss eine sich zur Oberkante hin verengende Rinne aufweist, die in Richtung vom Boden zur Oberkante eine Neigung zur bzw. in der Vorderwand aufweist, wobei die Rinne des Ausgusses eine ebene Fläche aufweist, welche auf jeder Seite von je einer in einem Winkel dazu angeordneten Seitenfläche begrenzt ist.

Derartige Lösungen für das Ausgießen von Gargut haben sich weitgehend durchgesetzt und werden in der Praxis auch meist eingesetzt. Durch die Rinne entsteht ein gezielter Vorzugsweg für das auszugießende Gut. Dieses läuft dann konzentriert innerhalb dieser Rinne und bevorzugt nicht neben der Rinne über die Oberkante der Wandung. Bei geschlossenem Zustand und aufgelegtem Deckel auf der Oberkante der Gefäßwandung kann eine Druckdichtigkeit noch erreicht werden.

Die Konzeption gemäß DE 35 25 845 A1 nutzt für die Anordnung der Rinne die Doppelwandigkeit des Behälters und die aufgrund der Doppelwandigkeit bestehende Breite auch der Vorderwandung, indem im Bereich der Rinne diese Vorderwandung zur Oberkante hin verschlankt wird und so die Rinne bildet. Dadurch kann die Rinne und der Ausguss gebildet werden, ohne dass die umlaufende Kontaktfläche von Garbehälter und Deckel unterbrochen wird, was einer Dichtwirkung entgegenstehen würde.

Besonders nachteilig bei dem Gargerät dieses Standes der Technik hat sich das unbefriedigende Ausgießverhalten erwiesen. Der Volumenstrom des auszugießenden Gargutes darf eine bestimmte Höhe nicht überschreiten, da ansonsten auch außerhalb des Ausgusses in mehr oder weniger größerem Umfang Gargut während des Kippvorganges aus dem Garraum herausströmt. Dies ist insbesondere dadurch problematisch, dass die Kippbewegungen meist unregelmäßig verlaufen. Wird der Kippvorgang manuell bedient, so ist eine gleichmäßige Kippbewegung in der Regel ohnehin nicht möglich, aber auch bei motorisch verlaufenden Kippvorgängen gibt es bestimmte Phasen der Kippbewegung in denen tendenziell ein größerer Volumenstrom den Garraum im Garbehälter verlassen will. Schon einzelne kurze Phasen führen dazu, dass der Inhalt des Garbehälters gewissermaßen überschwappt und nicht nur, wie beabsichtigt, über den Ausguss den Garbehälter verlässt, sondern zusätzlich auch seitlich des Ausgusses.

Dies hat nicht nur zur Folge, dass bereits zubereitetes Gargut verlorengeht und unbrauchbar wird, weil es neben den kleineren Auffangbehälter fällt, sondern auch, dass dieses verlorengehende Gargut eine erhebliche Verschmutzung darstellt, etwa weil das Gargut in Form von verschütteter Suppe auf den Boden einer Großküche landet und dort schon aus Hygienegründen möglichst rasch entfernt werden muss. Die verschütteten Teile des Garguts bekleckern möglicherweise auch von außen die Außenwände des Garbehälters und sind nicht zuletzt aufgrund der Temperatur des erhitzten Gargutes auch ein Verbrennungsrisiko für möglicherweise in diesem Bereich in der Nähe des Gargerätes sich befindende Personen, die mit überschwappenden und überspritzenden Bestandteilen einer heißen Suppe aus dem Garbehälter nicht rechnen.

Der vorliegenden Erfindung liegt deshalb die Aufgabe zugrunde, ein Gargerät zur Behandlung von Nahrungsmitteln zu schaffen, bei dem ein brauchbares Ausgießverhalten verwirklicht wird und gleichzeitig eine zuverlässige Abdichtung bei geschlossenem Deckel erzielt wird.

Erfindungsgemäß wird diese Aufgabe insbesondere dadurch gelöst, dass an der Kante auf beiden Seiten des Ausgusses jeweils mindestens ein Leitelement angeordnet ist, das über die zugehörige Wand vorspringt, und dass die Leitelemente den Ausguss begrenzende Leitflächen aufweisen, die mit den Seitenflächen des Ausgusses je eine ebene gemeinsame Fläche bilden.

Dadurch wird vorteilhafterweise erreicht, dass das vor allem flüssige Gargut durch die Leitelemente dem Ausgussbereich stärker zugeführt wird und ein Abfließen außerhalb des Ausgussbereichs vermieden werden kann. Mit anderen Worten, das ausströmende und auszugießenden Gargut wird erfindungsgemäß gezielt in eine gewünschte Strömungsrichtung gelenkt. Die Ausbildung der Leitelemente, die entfernt an "Ohren" auf den beiden Seiten des Ausgusses erinnern, ermöglichen eine Führung und Bündelung des Stromes des auszugießenden Gargutes, und zwar über die Oberkante der zugehörigen Umwandung des Garbehälters hinweg und hinaus.

Ein seitliches Überschwappen wird somit vermieden und kann das ausfließende Gargut gezielt und sicher in den Aufnahmebehälter ausgegossen werden.

Mit derart ausgebildeten Leitelementen beziehungsweise Leitblechen wird gewissermaßen die Seitenfläche der Rinne des Ausgusses auf beiden Seiten nach oben verlängert. Es ergibt sich eine ebene Fläche ohne eine darin befindliche Winkeländerung. Dies ist für das Strömungsverhalten außerordentlich günstig, zumal die strömenden Gargutteilchen auf diese Weise eine einmal eingenommene Strömungsrichtung nach außen auch über die Oberkante hinaus fortsetzen und eine Verwirbelung oder Stauung vermieden wird. Die auf diese Weise geförderte "Wurfparabel" während des Kippvorgangs unterstützt zusätzlich die Kanalisierung des strömenden Gargutes bei der Überführung in die kleineren dort stehenden Behälter und reduziert jede Tropfneigung oder auch sonst nicht vorhersehbare Spritzneigung des Gargutes beim Ausgießen während des Kippvorgangs.

Die Kombination der einzelnen Merkmale ergibt einen Synergieeffekt. Das auszugießende Medium wird so kanalisiert, dass sich ein strahlähnliches Verhalten ergibt. Das Gargut fließt somit nicht gleichmäßig über die gesamte zur Verfügung stehende Grenzlinie des Garbehälters, sondern strahlförmig zwischen den Leitelementen in die gewünschte Richtung. Dadurch wird auch ein gezieltes Ausgießen des Garguts in Aufnahmebehälter mit relativ kleinen Öffnungen möglich.

Eine geeignete Dimensionierung der Leitelemente links und rechts vom Ausguss ermöglicht einen sehr genau vorausberechenbaren Gargutstrom über den gesamten Kippwinkel mit jeweils einer definierten Mindesthöhe des Gargutstromes. Dadurch kann ein sicheres Ausgießen gewährleistet werden. Eine definierte Mindesthöhe hat den Vorteil, dass eine saubere und vorhersehbare Trennung des über die Kante der Wandung strömenden Gutes von dieser Wandung sichergestellt werden kann. Ist nämlich die strömende Menge pro Zeiteinheit zu gering, so tendiert sie dazu, unmittelbar an der Wandung über die Kante nicht weiterzuströmen, sondern nach unten durch die Adhäsionskräfte an der Wandung zu verbleiben und Nasen zu bilden. Auch eine Tropfenbildung wird bei zu geringem Volumenstrom in stärkerem Maße unerwünscht stattfinden. So können vorteilhafterweise auch diese Effekte der erfindungsgemäßen Merkmalskombination vermieden werden.

Auch bei einem automatisierten Auskippen können die jeweiligen Kippstellungen aufgrund dieser gut vorhersehbaren Verhaltensweise des Gargutstromes rasch angefahren werden, was ein tropffreies Ausgießen zusätzlich unterstützt.

Der entstehende Garraum ist darüber hinaus leicht zu reinigen, da der Bereich der Oberkante anders als bei den bewährten Druckgarpfannen der Anmelderin keine zusätzlichen Innenkanten mehr aufweist. Da es auch nur noch im Bereich der Leitelemente links und rechts neben dem Ausguss relativ dünne Abschnitte gibt, nämlich in Form der Leitelemente, bevorzugt ausgebildet als Leitbleche, ist auch die Behinderung und die Gefahr von Verbrennungen der Benutzer deutlich reduziert, da keine unvermuteten heißen Flächen mehr existieren.

Zudem wird der Vorteil einer deutlich einfacheren Fertigung erreicht, da der Deckel nicht mehr die Passform durch einen umlaufenden Rand nachbilden muss. Der Garraum kann in einem Stück mit klar definierter Oberkante gefertigt werden.

Der Fertigungsaufwand wird weiterhin dadurch, dass nur noch die Leitelemente beziehungsweise Leitbleche während des Garvorganges aufgenommen werden müssen.

Diese einfachen Strukturen sind im Vergleich zu den herkömmlichen aufwändigen Ausführungen deutlich günstiger herzustellen. Dies reduziert die Kosten und auch die Fehleranfälligkeit und die Erfordernis von Nachbearbeitungen. Der gesamte Garraum kann in einem Stück mit einer klar definierten Oberkante gefertigt werden.

Besonders bevorzugt ist es vorgesehen, wenn die Seitenflächen des Ausgusses einen Winkel von 130° bis 140°, bevorzugt von 136°, mit der ebenen Fläche der Rinne des Ausgusses einschließen.

Die entstehenden Leitflächen der Leitelemente führen dazu, dass die Leitelemente selbst nicht notwendig senkrecht auf der Oberkante der Wandung stehen. Die Leitbleche können also auch in einem Winkel zur Wandungsebene angeordnet sein.

Eine derartige Ausbildung der Leitflächen der Leitelemente in einer Ebene mit den Seitenflächen der Rinne des Ausgusses ist natürlich zusätzlich fertigungstechnisch günstig und erleichtert außerdem nochmals die Reinigung des gesamten Bereiches.

Die Leitelemente sind bevorzugt Leitbleche, die in den besonders bevorzugten Ausführungsformen dreieckig über den umlaufenden Rand der oberen Kanten der verschiedenen Wandungen (Rückwand, Seitenwand, Vorderwand) nach oben vorstehen bzw. vorspringen. Die Dreiecksflächen werden durch die Oberkante der Wandung, die steil nach oben aufragende Seitenkante benachbart zur Rinne des Ausgusses und schließlich durch die relativ sanft schräg nach unten abfallende obere Begrenzungskante der Leitfläche gebildet.

Diese Dreieckform ist leicht zu reinigen. Sie bildet bei einer Betrachtung der Tiegelfront etwa in Höhe des Ausgusses die erwähnten "Ohren".

Der Überstand durch diese Leitelemente ist auf ein Minimum reduziert, so dass in dem Deckel zum druckdichten Verschließen während des Garvorganges auch nur minimale Anpassungen vorgenommen werden müssen. Der Ausgießvorgang ist demgegenüber optimiert.

Bevorzugt ist vorgesehen, dass die Tiefe der Rinne des Ausgusses zumindest 50 mm an der Kante beträgt.

Besonders bevorzugt ist dabei vorgesehen, dass die Neigung der ebenen Fläche des Ausgusses relativ zur Wandung des Garbehälters zwischen 10° und 15° beträgt, vorzugsweise zwischen 12° und 13°.

Diese beiden Merkmale führen dazu, dass im Bereich des Ausgusses die obere Kante etwa 30 % der Tiefe beziehungsweise "Dicke" oder Stärke der oberen Kante der Vorderwand außerhalb des Ausgusses beträgt. Dieser Bereich liegt darüber hinaus auch außerhalb der Leitelemente und steht mithin für die Dichtung zur Verfügung. Er kann während des Garvorganges also die Aufgabe einer Abdichtung übernehmen.

Um die Leitelemente im Deckel aufzunehmen, können dort in einer Ausführungsform entsprechende Ausnehmungen oder Aussparungen vorgesehen werden, oder es wird ein insgesamt umgekehrt wannenförmiger Deckel eingesetzt. Auch andere Formen des Deckels sind möglich. Wichtig ist, dass während des Garvorgang durch eine hinreichende Auflagefläche auf der verbleibenden oberen Kante der Vorderwand und umlaufend auf den anderen Wandelementen bestehen bleibt.

Grundsätzlich denkbar wäre auch eine Abdichtung durch den Deckel von außen durch Überkragen und Aufliegen auf der Wandung.

Die Leitelemente lassen sich ohne zusätzliches Presswerkzeug herstellen, was den Vorteil hat, dass während des Herstellvorgangs Garbehälter, also insbesondere Tiegel, in unterschiedlichen Höhen und Größen ohne entsprechende kostspielige Umrüstung herstellen lassen.

Mit den erfindungsgemäßen Leitelementen lassen sich für den Garvorgang Druckdichtigkeiten von 800 hPa entsprechend 0,8 bar Arbeitsdruck und 1300 hPa entsprechend 1,3 bar Prüfdruck gewährleisten.

Der Kippvorgang lässt sich auf einen sehr kurzen Zeitraum begrenzen und in diesem Zeitraum eine große Menge Gargut äußerst sauber und gezielt ausgießen.

Weitere Einzelheiten, bevorzugte Merkmale und Vorteile der Erfindung sind in den Ansprüchen sowie in der anschließenden Figurenbeschreibung angegeben.

Im Folgenden werden anhand der Zeichnungen Ausführungsbeispiele der Erfindung sowie das Grundprinzip näher erläutert. Es zeigen:
- **Figur 1**: eine perspektivische und grob vereinfachte Ansicht eines kippbaren Garbehälters mit Deckel;
- **Figur 2**: eine perspektivische praxisnähere Ansicht einer Form der Erfindung;
- **Figur 3**: eine vergrößerte Darstellung des Bereiches des Ausgusses aus der Figur 2;
- **Figur 4**: eine Darstellung des Ausgusses aus der Figur 3, gesehen vom Garraum aus;
- **Figur 5**: eine schematische Seitenansicht eines Garbehälters in Ruheposition; und
- **Figur 6**: eine Darstellung des Garbehälters aus Figur 5 während eines Kippvorgangs.

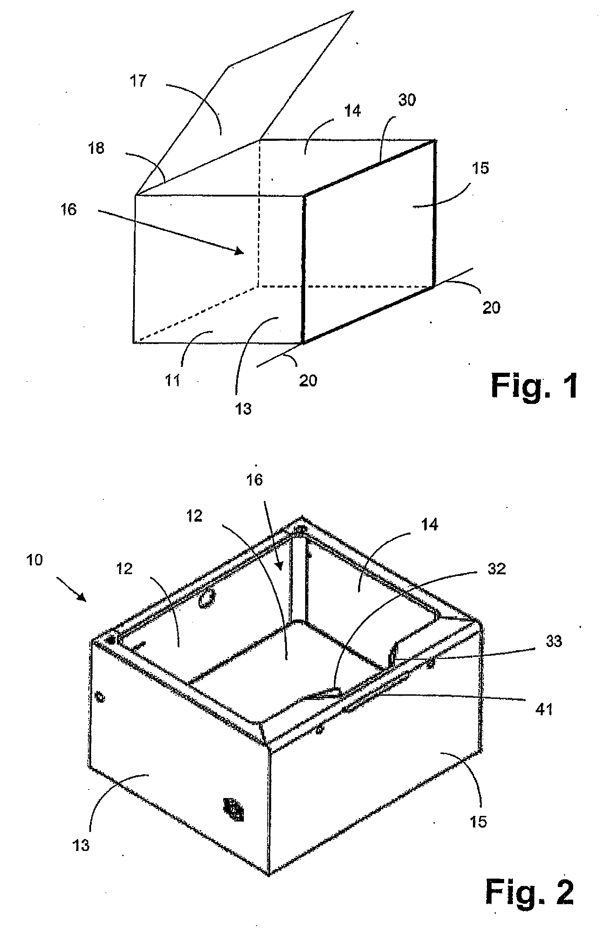

In der **Figur 1** ist schematisch eine perspektivische Ansicht auf eine Grundform eines Kipptiegels oder einer Kippbratpfanne oder eines anderen Gargerätes mit einem verschwenkbaren Garraum dargestellt. Man blickt dabei perspektivisch schräg von oben auf einen Garbehälter 10. Der Garbehälter 10 besitzt die Form einer Wanne, eines Tiegels oder einer Pfanne und weist einen Boden 11, eine Rückwand 12, zwei Seitenwände 13 und 14 und eine Vorderwand 15 auf. Nach oben ist der Garbehälter 10 offen und die Seitenwände 13, 14, die Vorderwand 15 und die Rückwand 12 umschließen einen Garraum 16.

Die Rückwand 12, die beiden Seitenwände 13 und 14 und die Vorderwand 15 sind jeweils Doppelwände. Zwischen der dem Garraum 16 zugewandten Innenwand und der dem Außenraum zugwandten Außenwand können Aggregate, eine Wärmedämmung und dergleichen angeordnet sein.

Der Garraum 16 muss nicht zwingend würfel- oder quaderförmig wie in der Figur 1 sein, sondern kann auch ganz anders ausgebildet sein. Denkbar ist auch eine stufenförmige Ausbildung der Wände, Abrundungen oder auch eine Kalottenform des Bodens 11 sind ebenfalls denkbar.

In dem Garraum 16 werden insbesondere Nahrungsmittel zubereitet, also unter anderem erhitzt, gegebenenfalls auch gerührt und bewegt, was hier nicht dargestellt ist.

In vielen Ausführungsformen wird dabei ein Deckel 17 vorgesehen, der über eine Gelenkachse 18 schwenkbar mit der Oberkante 30 der Rückwand 12 verbunden ist. Der Deckel 17 kann während des Garvorganges die offene Oberseite des Garbehälters 10 abdecken und somit den Garraum 16 zu einem vollständig umschlossenen Innenraum gestalten, in dem auch gezielt ein Überdruck herstellbar ist, wenn dieser für die Zubereitung des Nahrungsmittels im Garraum 16 gewünscht wird.

Der Deckel 17 liegt dabei auf der Oberkante der Rückwand 12, der beiden Seitenwände 13 und 14 und der Vorderwand 15 auf und ist durch geeignete, nicht dargestellte Elemente druckdicht verschlossen.

Nicht dargestellt ist auch, dass etwa Zuführleitungen für die Zugabe von Wasser oder Zutaten (Zucker, Gewürze) in der Wandung des Garbehälters 10 oder des Deckels 17 vorgesehen sein können.

Als Nahrungsmittel kommen insbesondere flüssige, cremige oder schüttfähige Nahrungsmittel in Betracht, beispielsweise Suppen, Soßen, Rührei, Süßspeisen, Reis oder Erbsen.

Nachdem der Garvorgang fast oder ganz abgeschlossen ist, ist es erforderlich, die nunmehr zubereiteten Nahrungsmittel beziehungsweise Speisen aus dem Garraum 16 zu entnehmen und in andere Aufnahmebehälter oder Gerätschaften zu überführen, damit entweder der Zubereitungsvorgang in anderer Form fortgesetzt werden kann, oder auch damit die fertig zubereiteten Speisen zum Verzehr abtransportiert werden können.

Gerade bei flüssigen, cremigen oder schüttfähigen Nahrungsmitteln beziehungsweise Speisen ist es dabei vorteilhaft, wenn der Garbehälter 10 mit samt der in ihm befindlichen Nahrungsmittel gekippt werden kann, und zwar vorzugsweise um eine Achse 20. Da der Deckel 17 wie in der dargestellten Grobskizze um eine Gelenkachse 18 an der Rückwand 12 schwenkbar ist, wird zweckmäßig die Kippachse 20 parallel zu dieser Gelenkachse 18 vorgesehen, und zwar im Bereich der Vorderwand 15, beispielsweise und bevorzugt im Bereich der Unterkante der Vorderwand 15, wo diese auf den Boden 11 trifft.

Wird der Garbehälter 11 um diese Drehachse 20 nach oben und in der Darstellung in der Figur 1 rechts, also nach vorne gekippt, so kann das Nahrungsmittel oder der sonstige Inhalt aus dem Garraum 16 über die Oberkante 30 der Vorderwand 15 herausgekippt werden, beispielsweise in dort vorbereitete, (nicht dargestellte) kleinere Aufnahmebehälter.

Während des Kippvorganges ist die Oberkante 30 der Vorderwand 15 der auf dem tiefsten Niveau liegende Bereich der umlaufenden Kante des Garbehälters 10, sodass dort (und nur dort) der Inhalt aus dem Garraum 16 herausgelangt.

Durch fortgesetztes weiteres Kippen kann kontinuierlich der gesamte Inhalt des Garraums 16 über diese Oberkante 30 der Vorderwand 15 hinaus ausgegossen werden.

Wenn der Kippvorgang einen Kippwinkel von 90° erreicht hat, bildet die Vorderwand 15 des Garbehälters 10 eine horizontale untere Fläche des Garraums 16, der sich mithin zu diesem Zeitpunkt vollständig über die Oberkante 30 entleert.

Diese prinzipielle Darstellung zeigt zugleich schon ein auftretendes Problem: Der Ausgießvorgang würde über die komplette Oberkante 30 erfolgen und damit nicht in kleinere Behälter erfolgen können, die vor der Vorderwand 15 stehen. Darüber hinaus würde auch in den Eckbereichen der Vorderwand 15 und der Seitenwände 13 und 14 auch eine Teilmenge des ausströmenden Nahrungsmittels beziehungsweise Garguts über diese Randbereiche der Oberkanten der Seitenwände 13 und 14 hinweg seitlich ausströmen. Zu berücksichtigen ist ja, dass die ausströmende Menge des Nahrungsmittels eine endliche Höhe besitzt und nicht Null beträgt. Der ausflie-ßende Strom kann sogar durchaus je nach Kippgeschwindigkeit eine Höhe von 1 oder mehren Zentimetern besitzen.

Um diesem Phänomen zu begegnen, wird jetzt eine in der **Figur 2** dargestellte Modifizierung des Bereiches der Vorderwand 15 und der Oberkante 30 vorgenommen.

Dargestellt ist eine perspektivische Ansicht des Garbehälters 10, und zwar gesehen mit vollständig abgenommenen Deckel 17 schräg von oben in den Garraum 16 hineinblickt. Die Perspektive ist so gewählt, dass man über die Ecke von der Vorderwand 15 und der Seitenwand 13 in den Garraum 16 blickt, also im Garraum 16 die Rückwand 12 und die andere Seitenwand 14 sowie den Boden 11 sieht.

Gut zu erkennen ist, dass die Wandung des Garbehälters 10, also Rückwand 12, Seitenwände 13 und 14 sowie Vorderwand 15, eine endliche Dicke haben, da sie nämlich doppelwandig ausgebildet sind. Das bedeutet auch, dass der obere Rand oder die umlaufende Kante, auf der der nicht dargestellte Deckel 17 aufliegt, auch umlaufend eine endliche Breite besitzt und überwiegend eben und in gleicher Höhe ausgebildet ist.

Der Ausgießvorgang während des Kippens des Garbehälters 10 würde wiederum über die Vorderwand 15 erfolgen, in der Figur 2 also nach rechts vorn.

Man erkennt, dass die Oberkante 30 in diesem Bereich besonders ausgestaltet ist.

Die Oberkante 30 ist im mittleren Bereich der Vorderwand 15 eindeutig schmaler oder dünner ausgebildet, als in den Bereichen der Vorderwand 15, die den Ecken zu den Seitenwänden 13 und 14 näher sind.

Die Oberkante 30 ist darüber hinaus flach und weitgehend eben, was man in der perspektivischen Darstellung nur ungefähr erkennen kann.

Aus diesem flachen und ebenen Bereich ragen zwei Leitelemente 32 und 33 nach oben heraus. Diese Leitelemente 32 und 33 sind links und rechts von dem mittleren Bereich mit der schmaleren Oberkante 30 angeordnet. Dieser mittlere Bereich ist ein Ausguss 31, der also von den beiden Leitelementen 32 und 33 links und rechts begrenzt wird.

Die Leitelemente 32 und 33 stehen schräg zur Oberkante 30, und zwar derart, dass sie genau eine Grenze der Oberkante 30 zu dem verengten mittleren Bereich der

Oberkante 30 im Bereich des Ausgusses 31 bilden. Der Ausguss 31 läuft also schräg in Ausgießrichtung zu.

Der Abstand zwischen den beiden Leitelementen 32 und 33 zwischen den Punkten, an denen sie sich am nächsten liegen, beträgt in bevorzugten Ausführungsformen zumindest 50 mm. Da hier der Ausguss 31 in seiner Breite begrenzt wird, sollte er zur Erzielung eines realistischen und in der Praxis brauchbaren Volumenstroms nicht nur eine bestimmte Mindesttiefe, sondern auch eine entsprechende Breite besitzen. Diese Breite ist natürlich auch maßgebend für die Auswahl von möglicherweise kleinen Behältern, die vor dem Ausguss 31 zur Aufnahme des herausströmenden Garguts vorzusehen sind.

Die Leitelemente haben in der dargestellten Ausführungsform eine Höhe von weniger als 30 mm. Dies hat den Vorteil, dass sie noch innerhalb des (nicht dargestellten) Deckels 17 während des Garvorganges aufgenommen werden können, jedoch bereits eine Höhe besitzen, die schon einen relevanten positiven Effekt auf den Volumenstrom hat.

Zu bedenken ist ja, dass das Gargut aus dem Inneren des Garraums 16 auch dann noch herausströmen soll, wenn der Garbehälter 10 seinen Kippvorgang nahezu beendet hat und der in der Figur 2 noch gut sichtbare Boden 11 während des Kippvorgangs nach der Entnahme des Garguts auch schon wieder von Gargut nahezu entleert ist.

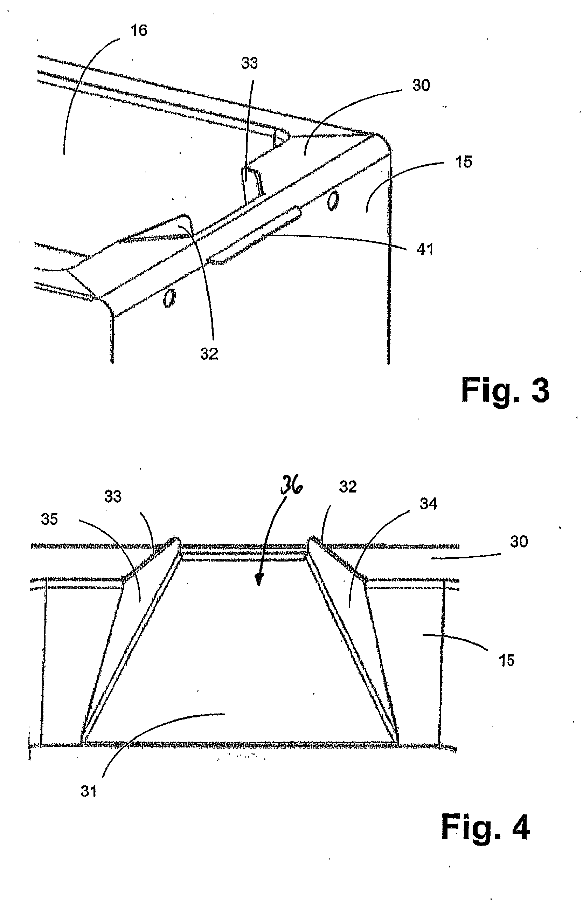

Angedeutet sieht man schon ein zusätzliches Element, nämlich eine Tropfkante 41, die noch im Zusammenhang mit Figur 3 näher erläutert wird.

In der **Figur 3** wird eine vergrößerte Darstellung eines Teilbereiches aus der Figur 2 in ähnlicher perspektivischer Ansicht gegeben.

Man sieht hier vergrößert die Vorderwand 15 und die ebene und horizontale Oberkante 30.

Die Oberkante 30 ist in ihrem mittleren Bereich wesentlich schmaler ausgebildet, da dort der Ausguss 31 vorgesehen ist. Der Ausguss 31 ist von den Leitelementen 32 und 33 begrenzt, die aus der Oberkante 30 nach oben heraus ragen und eine Art "Ohren" bilden.

Auf der vom Betrachter abgewandten Seite der Vorderwand 15 befindet sich der Garraum 16.

Man kann bereits gut erkennen, dass fertigungstechnisch eine solche Konzeption recht praktisch herzustellen ist und das auch die Reinigungsvorgänge deutlich vereinfacht werden, da die Zahl der Hinterschneidungen und Nuten sehr gering gehalten ist.

Wenn man sich den Ausgießvorgang vorstellt, so erkennt man, dass zwischen den beiden Leitelementen 32 und 33 der Volumenstrom sehr praktisch über den relativ schmalen, verbleibenden Bereich der Oberkante 30 hinweg strömen kann.

Man sieht, dass die Oberkante 30 zur Außenseite der Vorderwand 15 hin abgerundet ist. Diese Abrundung erleichtert die Trennung des Volumenstroms von dem Metallmaterial des Garbehälters 10.

Man sieht ferner, dass als zusätzlicher Schutz noch eine Tropfkante 41 um einige Millimeter unterhalb der Kante 30 angeordnet ist, und zwar nur im Bereich des Ausgusses 31. Diese Tropfkante 41 fängt noch verbleibende geringfügige Resttropfen des Volumenstroms auf. Zu beachten ist auch hier wiederum, dass während des Kippvorganges natürlich die Lage der einzelnen Flächen sich ändert und auch anders ist als in der Darstellung; so ist die horizontale obere Kante 30 dann nicht mehr horizontal, wenn der Garbehälter 10 um eine in der Figur 3 nicht dargestellte Kippachse 20 (vergleiche Figur 1) nach vorne rechts gekippt ist, wodurch auch die Vorderwand 15 in der Figur 3 nach hinten wegkippt.

In der **Figur 4** sieht man nun die Darstellung aus der Figur 3 aus einer anderen Sicht, nämlich vom Garraum 16 aus in Richtung zur Vorderwand 15. Man blickt also von innen aus dem Garraum 16 heraus oder anders ausgedrückt aus einer Position vor der Rückwand 12 auf den Ausguss 31, der innerhalb der Vorderwand 15 ausgebildet ist. Man sieht, dass der Ausguss 31 eine Rinne 36 bildet, die eine ebene Fläche aufweist. Diese Rinne 36 beginnt ungefähr an der Übergangsknicklinie zwischen dem Boden 11 und der Vorderwand 15 und weist einen Winkel mit der Vorderwand 15 auf, der im Bereich zwischen 10° und 15°, bevorzugt zwischen 12° und 13° beträgt. Das bedeutet, dass von unten nach oben die ebene Fläche der Rinne 36 den Garraumdurchmesser kontinuierlich, allerdings sehr langsam vergrößert.

Die Tiefe der Rinne 36 nimmt also von unten nach oben zu. Sie beträgt in einer praktischen Ausführungsform in Höhe der oberen Kante 30 etwa 50 mm. 50 mm sind etwa 2/3 oder ca. 70 % der Stärke der gesamten Wandung der Vorderwand 15, also der Garraumfront. Es bleiben also auch im Bereich des Abflusses etwa 30 % der oberen Kante 30 stehen, die für die Abdichtung während des Garvorganges nutzbar sind.

Der Abfluss 31 mit seiner Rinne 36 wird durch zwei Seitenflächen 34 und 35 links und rechts mit den nicht modifizierten Bereichen der Wandung der Vorderwand 15 verbunden. Diese Seitenflächen stehen ebenfalls schräg und zwar derart, dass die Breite der Rinne 36 des Abflusses 31 sich von unten nach oben reduziert.

Besonders auffallend ist, dass diese Seitenflächen 34 und 35 nach oben über die obere Kante 30 der Vorderwand 15 hinausragen. Die Seitenflächen 34 und 35 gehen hier in Leitflächen über, die von den Leitelementen 32 und 33 gebildet werden. In der dargestellten bevorzugten Ausführungsform der Erfindung sind also die Seitenflächen 34 und 35 des Ausgusses 31 und die jeweils zugeordnete Leitfläche der Leitelemente 32 und 33 in einer Ebene.

Zugleich bilden die oberen Begrenzungslinien der Leitelemente 32 und 33 mithin auch die oberen Grenzen dieser Seitenflächen 34 und 35 beziehungsweise Leitflächen.

Man sieht in der Figur sehr deutlich, dass ein Volumenstrom aus dem Garraum 16 heraus deutlich kanalisiert wird und während des Kippvorganges eine gezielte und ungehinderte Richtung einnimmt, die auch gut vorhersehbar ist.

Besondere Aufmerksamkeit sollte dabei dem Gedanken gewidmet werden, dass während des Kippvorganges durch die Leitflächen der Leitelemente 32 und 33 der Volumenstrom des ausgegossenen Gargutes eine bedeutend größere Höhe erreichen kann, als ohne diese Leitelemente 32 und 33. Diese verhindern nämlich, dass das Gargut während des Ausgießvorganges bei gleicher Höhe sich nach links und rechts über die Oberkante 30 hinweg in einer größeren Breite über die Vorderwand 15 hinweg ergießen kann.

Außerhalb der Leitelemente 32 und 33 kann kein Gargut über die Kante 30 strömen, wenn der Kippvorgang kontinuierlich durchgeführt wird, da dort während des Kippens durch die Innenseite der Vorderwand 15 eine größere Höhe aufgebaut wird.

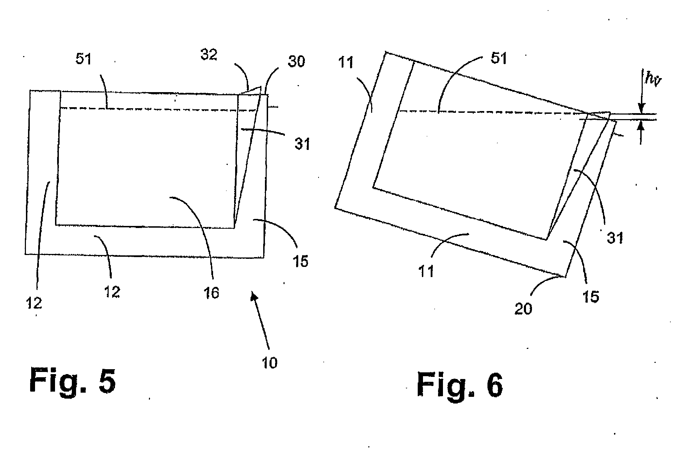

Um dies noch etwas deutlicher zu machen, ist in der **Figur 5** ein Garbehälter 10 mit wiederum nicht dargestelltem Deckel 17 wiedergegeben. Man sieht im Schnitt den Boden 11, die Rückwand 12 und die Vorderwand 15. In dem Garraum 16 ist Gargut angedeutet, dass sich bis zu einer gestrichelten Füllhöhe 51 erstrecken soll.

Man sieht rechts in der Vorderwand 15 schematisch angedeutet, dass dort eine Rinne für den Ausguss 31 vom Boden 11 schräg in der Vorderwand 15 nach oben läuft und sich oberhalb der Oberkante 30 der Vorderwand 15 Leitelemente 32, 33 erstrecken. In diesem Zustand kann kein Gargut ausströmen.

Es wird jetzt ein Kippvorgang in der **Figur 6** schematisch angedeutet. Die Kippachse 20 stehe senkrecht auf dem Zeichnungsblatt und der Garbehälter 10 werde nach rechts im Uhrzeigersinn um die Kippachse 20 gekippt. Entsprechend bleibt der Füllstand 51 des beispielsweise flüssigen oder cremigen Gargutes horizontal.

In dem nun schräg stehenden Garbehälter 10 wird durch das Anheben des Bodens 11 für das Gargut unterhalb der Füllhöhe 51 das Volumen knapp und entsprechend steigt das Volumen relativ zu der nun am tiefsten liegenden oberen Kante 30 der Vorderwand 15.

Man kann nun gut erkennen, dass in den Bereichen der Vorderwand 15 außerhalb des Ausgusses 31 die Füllstandshöhe 51 recht genau bis gerade zur dem Garraum 16 benachbarten Seite der oberen Kante 30 reicht. Hier kann also noch nichts über die Oberkante 30 hinwegschappen.

In dem Bereich des Ausgusses 31 dagegen ist die maximal mögliche Füllhöhe des Gargutes niedriger, da sie dort in die Rinne des Ausgusses 31 hinein ragt und die aufgrund des Kippvorganges noch etwas tiefer liegenden Bereiche der oberen Kante 30 benachbart zum Außenraum erreicht.

Der Unterschied hᵥ ist also diejenige Höhe des Gargutes, die als Strom während des Kippvorganges in diesem Moment den Garbehälter 10 verlässt und nach außen abfließt. Der Unterschied h_{V} ist zugleich der Höhenunterschied zwischen dem höchsten, dem Garraum 16 benachbarten Punkt beziehungsweise der Linie der oberen Kante 30 einerseits sowie der an die Rinne des Ausgusses 31 angrenzenden Linie der oberen Kante 30 der zum Ausgießen vorgesehenen Vorderwand 15, und zwar gesehen im jeweils aktuellen Kippzustand des Garbehälters 10.

Der Unterschied hᵥ ändert sich also während des Kippvorgangs; er nimmt während des Ausgießvorgangs kontinuierlich zu. Das hat auch den Vorteil, dass mit abnehmendem Gargutinhalt im Garraum 16 die Möglichkeit zum Abströmenlassen des Restinhalts sich verbessert, so dass insbesondere auch der Gargutstrom kurz vor der endgültigen Entleerung nicht wie gelegentlich im Stand der Technik üblich nur noch mühsam kommt, da aufgrund der geringen verbliebenen Restinhaltmenge wenig "Nachdruck" erfolgt.

Alle vorgenannten Überlegungen zu diesem Unterschied hᵥ gelten nur für den Bereich des Ausgusses 31, da nur hier das Gargut bis in diesen Bereich der oberen Kante 30 gelangen kann.

Damit wird jetzt die Funktion der bevorzugt dreieckigen Leitelemente 32 und 33 deutlich. Diese sorgen für genau den Übergangsbereich zwischen der ungestörten Vorderwand 15 mit der oberen Kante 30 in voller Breite und der Rinne des Ausgusses 31 dafür, dass die in diesem Bereich dichter als im ungestörten Bereich der Vorderwand 15 an die Außenlinie der Oberkante 30 heranreichenden Teile des Gargutes gleichwohl keine Möglichkeit besteht, außerhalb des vorgesehenen Ausgusses 31 etwa seitlich auf die obere Kante 30 zu gelangen und somit die Vorderwand 15 in seinem nicht beabsichtigten und nicht gewünschten Bereich zu verlassen.

Zugleich wird der Volumenstrom des ausgegossenen Gargutes kanalisiert und durch die Leitelemente 32 und 33 in einen stabilen und sauberen und auch zielgenauen Strahl fokussiert.

Dies wird verstärkt, wenn der Ausguss 31 mit seiner Rinne 36 und den Seitenflächen und Gleitflächen der Leitelemente so ausgebildet ist, wie dies in den Figuren 3 und 4 gut zu erkennen ist.

Man könnte die Formulierung für die Leitelemente auch etwa so wählen: Die Oberkante der Leitelemente 32 und 33 bildet bei beginnendem Ausgießvorgang mit noch maximalem Gargutvolumen Verlängerungen des Gargutniveaus. Beginnt nun der Ausgießvorgang, so bilden der Ausguss und die Leitelemente 32 und 33 einen Freiraum unterhalb der Füllstandshöhe 51 des Gargutes von mindestens der erwünschten Volumenstromhöhe im Zentrum des Ausgusses 31. Diese erwünschte Volumenstromhöhe liegt in einer Größenordnung von zumindest 10 mm. Die Leitelemente verhindern dabei ein seitliches Abfließen des Gargutvolumenstroms.

Da sich der Ausguss 31 vom Boden 11 zur oberen Kante 30 der Vorderwand 15 hin verengt, verringert sich auch der Abstand zwischen den Seitenwänden des Ausgusses 31 und auch der Abstand zwischen den beiden Leitflächen der Leitelemente 32 und 33. Durch die Kanalisierung entsteht sogar ein Gargutstrahl, dessen Breite während des Ausgießvorgangs kleiner ist als die Breite des Ausgusses 31.

### Bezugszeichenliste

- 10: Garbehälter
- 11: Boden
- 12: Rückwand
- 13: Seitenwand
- 14: Seitenwand
- 15: Vorderwand
- 16: Garraum
- 17: Deckel
- 18: Genlenkachse des Deckels
- 20: Kippachse des Garbehälters 10
- 30: Oberkante der Seitenwand 15
- 31: Ausguss
- 32: Leitelement
- 33: Leitelement
- 34: Seitenwand des Ausgusses 31
- 35: Seitenwand des Ausgusses 31
- 36: Rinne
- 41: Abtropfkante
- 51: Füllstandshöhe

## Patentansprüche

1. Gargerät zur Behandlung von Nahrungsmitteln, mit einem Garbehälter (10), der eine Vorderwand (15), eine Rückwand (12), zwei Seitenwände (13, 14) und einen Boden (11) aufweist, die zusammen einen Garraum (16) bilden, wobei ein Deckel (17) vorgesehen ist, der in der Lage ist, den Garraum (16) zu verschließen, wobei der Garbehälter (10) um eine Kippachse (20) zur Entleerung des Garraums (16) kippbar ist, wobei zum Entleeren des Garraums (16) eine obere Kante bzw. Oberkante (30) an der Vorderwand (15) vorgesehen ist, in der ein Ausguss (31) ausgebildet ist, wobei der Ausguss (31) eine sich zur Oberkante (30) hin verengende Rinne (36) aufweist, die in Richtung vom Boden (11) zur Oberkante (30) eine Neigung zur bzw. in der Vorderwand (15) aufweist, wobei die Rinne (36) des Ausgusses (31) eine ebene Fläche aufweist, welche auf jeder Seite von je einer in einem Winkel dazu angeordneten Seitenfläche (34, 35) begrenzt ist,
**dadurch gekennzeichnet,**
**dass** an der Oberkante (30) auf beiden Seiten des Ausgusses (31) jeweils mindestens ein Leitelement (32, 33) angeordnet ist, das über die Oberkante (30) der Vorderwand (15) vorsteht bzw. vorspringt, und
**dass** die Leitelemente (32, 33) den Ausguss (31) begrenzende Leitflächen aufweisen, die mit diesen Seitenflächen (34, 35) des Ausgusses (31) je eine ebene gemeinsame Fläche bilden.

2. Gargerät nach Anspruch 1, **dadurch gekennzeichnet, dass** die Tiefe der Rinne (36) des Ausgusses (31) zumindest 50 mm in Höhe der oberen Kante (30) beträgt.

3. Gargerät nach einem der vorstehenden Ansprüche, **dadurch gekennzeichnet, dass** die Neigung der ebenen Fläche des Ausgusses (31) relativ zur Wandung (15) des Garbehälters (10) zwischen 10° und 15° beträgt, vorzugsweise zwischen 12° und 13°.

4. Gargerät nach einem der vorstehenden Ansprüche, **dadurch gekennzeichnet, dass** die Seitenflächen (34, 35) des Ausgusses (31) einen Winkel von 130° bis 140°, bevorzugt von 136°, mit der ebenen Fläche der Rinne des Ausgusses (31) einschließen.

5. Gargerät nach einem der vorstehenden Ansprüche, **dadurch gekennzeichnet, dass** die Leitelemente (32, 33) die Oberkante (30) um weniger als 30 mm übersteigen, und/oder dass die Leitelemente (32, 33) mit zunehmendem Abstand vom Ausguss (31) schräg nach unten abfallen.

6. Gargerät nach einem der vorstehenden Ansprüche, **dadurch gekennzeichnet, dass** auf der Außenseite der Vorderwand (15) unterhalb der oberen Kante (30) eine Abtropfkante (41) vorgesehen ist.

7. Gargerät nach einem der vorstehenden Ansprüche, **dadurch gekennzeichnet, dass** der obere Rand der Wände (12, 13, 14, 15) mit Ausnahme der Leitelemente (32, 33) in einer Ebene liegt.

## Claims

1. A cooking device for the processing of foodstuffs, with a cooking container (10), which provides a front wall (15), a rear wall (12), two side walls (13, 14) and a base (11), which together form a cooking chamber (16),
wherein a lid (17) which is capable of sealing the cooking chamber (16) is provided,
wherein the cooking container (10) can be tilted about a tilting axis (20) for the emptying of the cooking chamber (16),
wherein, for the emptying of the cooking chamber (16), an upper edge or respectively top-edge (30) in which a pouring lip (31) is embodied is provided on the front wall (15),
wherein the pouring lip (31) provides a channel (36) narrowing towards the top-edge (30), which provides a gradient towards, respectively within, the front wall (15) in the direction from the base (11) towards the top-edge (30),
wherein the channel (36) of the pouring lip (31) provides a flat face which is limited at each side by one lateral face (34, 35), in each case arranged at an angle to it,
**characterised in that**
on the top-edge (30), at both sides of the pouring lip (31) in each case, at least one guide element (32, 33) is arranged, which projects, respectively protrudes, above the top-edge (30) of the front wall (15), and
that the guide elements (32, 33) provide guide faces limiting the pouring lip (31), which, with these lateral faces (34, 35) of the pouring lip (31), in each case form a common flat face.

2. The cooking device according to claim 1,
**characterised in that**
the depth of the channel (36) of the pouring lip (31) is at least 50 mm at the level of the upper edge (30).

3. The cooking device according to any one of the preceding claims,
**characterised in that**
the gradient of the flat face of the pouring lip (31) relative to the wall (15) of the cooking container (10) is between 10° and 15°, preferably between 12° and 13°.

4. The cooking device according to any one of the preceding claims,
**characterised in that**
the lateral faces (34, 35) of the pouring lip (31) enclose an angle from 130° to 140°, preferably of 136°, with the flat face of the channel of the pouring lip (31).

5. The cooking device according to any one of the preceding claims,
**characterised in that**
the guide elements (32, 33) project above the top-edge (30) by less than 30 mm, and/or that the guide elements (32, 33) slope diagonally downwards with increasing distance from the pouring lip (31).

6. The cooking device according to any one of the preceding claims,
**characterised in that**
a drip blade (41) is provided on the outside of the front wall (15), below the upper edge (30).

7. The cooking device according to any one of the preceding claims,
**characterised in that**
the upper edge of the walls (12, 13, 14, 15) is disposed in one plane with the exception of the guide elements (32, 33).

## Revendications

1. Appareil de cuisson pour le traitement de produits alimentaires, comprenant un récipient de cuisson (10), qui présente une paroi avant (15), une paroi arrière (12), deux parois latérales (13, 14) et un fond (11), qui forment ensemble un compartiment de cuisson (16), un couvercle (17), qui peut fermer le compartiment de cuisson (16), étant prévu, le récipient de cuisson (10) pouvant basculer autour d'un axe (20) pour vider le compartiment de cuisson (16), une arête supérieure ou bord supérieur (30), dans lequel est réalisé un bec verseur (31), étant prévu sur la paroi avant (15) pour vider le compartiment de cuisson (16), le bec verseur (31) présentant une goulotte (36), qui se rétrécit en direction du bord supérieur (30) et présente du fond (11) en direction du bord supérieur (30) une inclinaison par rapport à la paroi avant (15) ou dans cette dernière, la goulotte (36) du bec verseur (31) présentant une surface plane, délimitée sur chaque côté par une face latérale (34, 35) disposée sous un angle par rapport à cette dernière,
**caractérisé en ce que**
au moins un élément de guidage (32, 33) est disposé sur le bord supérieur (30) sur chacun des deux côtés du bec verseur (31), lequel élément est en saillie ou en porte-à-faux du bord supérieur (30) de la paroi avant (15), et
les éléments de guidage (32, 33) présentent des faces de guidage, qui délimitant le bec verseur (31) et forment respectivement une surface plane commune avec ces faces latérales (34, 35) du bec verseur (31).

2. Appareil de cuisson selon la revendication 1, **caractérisé en ce que** la profondeur de la goulotte (36) du bec verseur (31) est d'au moins 50 mm au niveau de l'arête supérieure (30).

3. Appareil de cuisson selon l'une des revendications précédentes, **caractérisé en ce que** l'inclinaison de la surface plane du bec verseur (31) par rapport à la paroi (15) du récipient de cuisson (10) est comprise entre 10° et 15°, de préférence entre 12° et 13°.

4. Appareil de cuisson selon l'une des revendications précédentes, **caractérisé en ce que** les faces latérales (34, 35) du bec verseur (31) forment un angle de 130° à 140°, de préférence de 136°, avec la surface plane de la goulotte du bec verseur (31).

5. Appareil de cuisson selon l'une des revendications précédentes, **caractérisé en ce que** les éléments de guidage (32, 33) dépassent du bord supérieur (30) de moins de 30 mm, et/ou que les éléments de guidage (32, 33) chutent en oblique vers le bas avec une distance croissante par rapport au bec verseur (31).

6. Appareil de cuisson selon l'une des revendications précédentes, **caractérisé en ce qu'**une arête d'égouttage (41) est prévue sur le côté extérieur de la paroi avant (15) au-dessous de l'arête supérieure (30).

7. Appareil de cuisson selon l'une des revendications précédentes, **caractérisé en ce que** le bord supérieur des parois (12, 13, 14, 15) se situe dans un plan, à l'exception des éléments de guidage (32, 33).
